# EUROPÄISCHE PATENTANMELDUNG

(11) **EP 2 179 646 A1**
(43) Veröffentlichungstag der Anmeldung: **28.04.2010**
(21) Anmeldenummer: 09450202.8
(22) Anmeldetag: 27.10.2009
(51) Int. Cl.: A01L 1/04

(54) **Hufschutz, insbesondere Hufeisen für Reittierhufe**

(30) Priorität: 27.10.2008 AT 61108 U
(71) Anmelder: König, Franz, 7561 Poppendorf (AT)
(72) Erfinder: König, Franz, 7561 Poppendorf (AT)
(74) Vertreter: Cunow, Gerda

(57) **Zusammenfassung**

Bei einem Hufschutz, insbesondere Hufeisen (1), für Reittierhufe mit einem hufeisenförmigen, eine Laufseite und eine Hufauflageseite aufweisenden Grundkörper sowie gegebenenfalls wenigstens einen am Grundkörper festgelegten Aufzug (11), ist der Grundkörper wenigstens aus zwei Teilen (2, 3) ausgebildet und die zwei Teile (2, 3) des Grundkörpers sind gelenkig miteinander verbunden.

## Beschreibung

Die vorliegende Erfindung bezieht sich auf einen Hufschutz, insbesondere ein Hufeisen für Reittierhufe mit einem hufeisenförmigen, eine Laufseite und eine Hufauflageseite aufweisenden Grundkörper sowie gegebenenfalls wenigstens einen am Grundkörper festgelegten Aufzug.

Zum Schutz der Hufe von Reittieren vor einem übermäßigen Abnützen werden schon seit dem Altertum Hufeisen verwendet, wobei die heute überwiegend eingesetzte Form eines Hufeisens, welches auf den Huf des Reittieres genagelt ist, bereits seit dem Mittelalter im Einsatz ist.

Hufeisen existieren derzeit in unterschiedlichsten Formen, um damit bestimmte orthopädische Wirkungen zu erzielen und auch Materialien, wie beispielsweise Stahl, Eisen, Aluminium und auch Kunststoff sowie Kombinationen der zuvor genannten Materialien, um einerseits die nötige Weichheit bzw. Elastizität des Eisens bzw. Hufschutzes zur Verfügung zu stellen und andererseits die übermäßig starke Abnutzung eines Hufschutzes hintanzuhalten. Zur Verbesserung ihrer orthopädischen Wirkung bzw. um den Huf des Reittieres so weit wie möglich zu schonen, wird in neuerer Zeit der Hufschutz, insbesondere ein aus Kunststoff bestehender Hufschutz, auch auf den Reittierhuf geklebt. Jedoch auch mit einem geklebten Hufschutz kann die Elastizität zwischen Huf und Hufschutz nicht bzw. nicht wesentlich erhöht werden.

Insbesondere bei vollständig aus Metall gefertigten Beschlägen bzw. gefertigtem Hufschutz gelingt es jedoch nicht, die gewünschte Elastizität des Hufschutzes, insbesondere in Kombination mit dem sich beim Auffußen des Tieres merkbar bewegenden Huf in Übereinstimmung zu bringen, so daß sämtliche bis dato zum Einsatz gelangenden Hufeisen entweder an dem Mangel leiden, daß sie eine zu geringe Elastizität aufweisen oder an dem Mangel leiden, daß sie sich übermäßig stark und rasch abnutzen, wodurch neben relativ hohen Kosten für den Beschlag per se auch ein relativ häufiges Beschlagen bzw. neues Festkleben der Reittierhufe erforderlich ist, was wiederum für den Reittierhuf selbst nicht günstig ist.

Die vorliegende Erfindung zielt nun darauf ab, einen Hufschutz, insbesondere ein Hufeisen für Reittierhufe zur Verfügung zu stellen, mit welchem es einerseits gelingt einen dauerhaften und relativ abnutzungsresistenten Beschlag zu erzielen und andererseits die für eine gesunde Bewegung des Reittierhufes erforderliche nötige Elastizität zur Verfügung stellt.

Zur Lösung dieser Aufgabe ist der erfindungsgemäße Hufschutz **dadurch gekennzeichnet, daß** der Grundkörper wenigstens zweigeteilt ausgebildet ist und daß jeweils zwei Teile des Grundkörpers gelenkig miteinander verbunden sind. Dadurch, daß der Grundkörper dieses Hufschutzes zweigeteilt ausgebildet ist und jeweils zwei Teile des Grundkörpers gelenkig miteinander verbunden sind, kann der Grundkörper des Hufschutzes der Bewegung des Hufes, insbesondere beim Auffußen des Reittieres folgen, bei welchem sein Huf im Bereich der Trachten auseinandergedrückt wird und somit breiter wird. Ein erfindungsgemäßer Hufschutz kann durch die gelenkige Verbindung der Teile des Grundkörpers diesem Aufweiten folgen, so daß ein der Bewegung des Hufes unmittelbar und elastisch folgender Hufschutz zur Verfügung gestellt werden kann, welcher neben der Forderung nach einem elastischen, auch die Forderung nach einem dauerhaften Hufbeschlag erfüllen kann.

Gemäß einer Weiterbildung der Erfindung ist der Hufschutz so ausgebildet, daß jeweils zwei Teile des Grundkörpers mittels einer lösbaren Gelenkverbindung verbunden sind. Durch eine derartige, lösbare Gelenkverbindung kann ein erfindungsgemäßer Hufschutz an die individuellen Bedürfnisse bzw. Gegebenheiten eines Reittierhufes noch besser angepaßt werden. So können beispielsweise beliebige Teile eines Grundkörpers über die Gelenkverbindung miteinander verbunden werden und auch beispielsweise bei einem Kaltbeschlag einzelne Teile des Hufschutzes getrennt voneinander bearbeitet werden, um auf diese Weise die lösbare Gelenkverbindung nicht unnötig durch Bearbeiten des Hufschutzes mittels eines Hammers zu beanspruchen, wodurch weiters eine Anpassung des Hufschutzes auch an gegebenenfalls krankhaft veränderten Reittierhufen einfach und zuverlässig möglich wird.

Gemäß einer Weiterbildung der Erfindung ist der Hufschutz so ausgebildet, daß die Gelenkverbindung aus einem an den daran anschließenden Teilen des Grundkörpers lösbar festgelegten Einsatz, einem Kugelgelenk und einer Verbindung mit eingesetztem Stift bzw. Niet oder dgl. gebildet ist. Durch Auswahl einer derartigen spezifischen Gelenkverbindung können insbesondere beliebige und den jeweiligen Erfordernissen angepaßte Hufeisen bzw. ein Hufschutz für Reittiere zur Verfügung gestellt werden, wobei beispielsweise eine einfache Größenanpassung bzw. Anpassung an die Breite des Reittierhufes eines Hufeisens durch Verwendung von an den daran anschließenden Teilen des Grundkörpers lösbar festgelegten Einsätzen erzielt werden kann. Bei Verwendung einer gelenkigen Verbindung, beispielsweise einer Verbindung mittels eingesetztem Stift bzw. Niet kann ein Hufschutz zur Verfügung gestellt werden, welcher insbesondere leicht bewegbar ist und besonders gut der Aufweitung der Trachten eines Reittierhufes beim Auffußen des Reittieres folgen kann.

Indem, wie dies einer Weiterbildung der Erfindung entspricht, der beidseitig lösbare Einsatz aus Kunststoff gebildet ist, gelingt es neben der erforderlichen Elastizität des Hufschutzes, d.h., daß der Hufschutz der Bewegung des Hufes des Reittieres beim Auffußen folgt, zusätzlich ein Dämpfungselement in den Hufschutz einzubauen, mit welchem beispielsweise Stöße auf den Reittierhuf, beispielsweise bei der Landung nach einem Sprung, deutlich abgemildert werden können, so daß der Hufschutz neben der erforderlichen Flexibilität zusätzlich auch eine gute Dämpfungswirkung gegenüber Stößen auf dem Reittierhuf aufweist.

Insbesondere indem, wie dies der bevorzugten Weiterbildung der Erfindung entspricht, der beidseitig lösbare Einsatz aus Kunststoff gebildet ist, kann die Stoßdämpfungswirkung auf dem Reittierhuf noch weiter verbessert werden, so daß unerwünschte Stöße und somit Reize, welche langfristig möglicherweise irreversible Schäden bzw. Verletzungen an dem Reittierhuf bzw. Bein hervorrufen, deutlich herabgesetzt bzw. vermieden werden können.

Indem, wie dies einer Weiterbildung der Erfindung entspricht, der Hufschutz so ausgebildet ist, daß in dem Hufschutz als beidseitig lösbarer Einsatz Einsatzelemente unterschiedlicher Größe, Dicke, Materialzusammensetzung und dgl. zum Einsatz gelangen, kann der Hufschutz an die individuellen Bedürfnisse des jeweiligen Reittieres einfach und zuverlässig angepaßt werden. Eine Anpassung kann hierbei nicht nur entsprechend der Breite des Hufes, sondern auch in bezug auf erforderliche Dämpfungseigenschaften, Abriebbeständigkeiten des Hufschutzes, Belastungen auf demselben und dgl. erzielt werden.

Um insbesondere bei Einsatz eines Kunststoffeinsatzes als lösbar festgelegter Einsatz eine übermäßige Beanspruchung des Kunststoffes, insbesondere während der Bearbeitung desselben und eine erhöhte Standzeit des Hufschutzes zur Verfügung zu stellen, wird die Erfindung dahingehend weitergebildet, daß im Bereich der Gelenkverbindung eine dem Gelenkverbundbereich übergreifende Metallhülse vorgesehen ist. Eine derartige Metallhülse kann beispielsweise eine metallisch ausgebildete Gelenkverbindung vor übermäßiger Verschmutzung und Überbeanspruchung durch den Kontakt der Gelenkverbindung mit dem Boden, wie Asphalt, Schotter, Sand und dgl. schützen, so daß bei Vorsehen einer Metallhülse über der Gelenkverbindung eine erhöhte Standzeit des Hufschutzes sichergestellt werden kann. Darüber hinaus kann ein derartiger Hufschutz insbesondere bei Kaltbeschlagen des Reittieres einfach und vor allem ohne Lösen der gelenkigen Verbindung bearbeitet werden, da die relativ empfindlichere Gelenkverbindung durch die Metallhülse vor übermäßiger Beanspruchung geschützt ist.

Um zumindest die Laufseite des Hufschutzes vor übermäßiger Beanspruchung zu schützen, kann die Erfindung dahingehend weitergebildet sein, daß wenigstens auf der Laufseite des Hufschutzes eine die Gelenkverbindung übergreifende Metallabdeckung vorgesehen ist. Durch eine derartige Metallabdeckung kann insbesondere ein beidseitig lösbarer Einsatz sicher vor dem Herausfallen aus dem Hufschutz infolge von Abnützung der gelenkigen Verbindungen gesichert werden und darüber hinaus auch eine übermäßige Beanspruchung einer gelenkigen Verbindung bzw. eines Einsatzes verhindert werden, so daß insgesamt die Standzeit und Zuverlässigkeit des Hufschutzes weiter verbessert wird.

Wenn der Hufschutz mit zwei gelenkigen Verbindungen, je eine in jedem Schenkelbereich, des Hufschutzes ausgebildet ist kann, wie die dies einer Weiterbildung der Erfindung entspricht, der Hufschutz so ausgebildet sein, daß die Metallabdeckung sich im wesentlichen über die gesamte Laufseite des Hufschutzes erstreckt. Durch eine derartige Ausbildung werden nicht nur die gelenkigen Verbindungen vor übermäßiger Beanspruchung geschützt sondern es kann durch eine deckungsgleiche Ausbildung der Metallabdeckung und des Hufschutzes zumindest in jenen Bereichen, wo eine freie Bewegung des Hufschutzes nicht erforderlich ist, eine gemeinsame Festlegung der Abdeckung und des Hufschutzes an dem Reittierhuf vorgenommen werden, wodurch die Standzeit des erfindungsgemäßen Hufschutzes weiter verbessert werden kann.

Für eine sichere und zuverlässige Positionierung des Hufschutzes auf dem Huf des Reittieres und insbesondere um ein Verrutschen während des Aufnagelns des Hufschutzes mit Sicherheit zu vermeiden, ist die Erfindung dahingehend weitergebildet, daß jeweils einer Gelenkverbindung zwei am Grundkörper festgelegte Aufzüge benachbart sind. Die Aufzüge bzw. Kappen haben darüber hinaus den Vorteil, daß spröde Hufe bzw. ausgebrochene Hufe besser gegen ein weiteres Brechen bzw. eine weitere Zerstörung des Hornmaterials des Hufes geschützt werden können und darüber hinaus wird eine sichere und zuverlässige Anlage des Hufschutzes in der Idealposition auf dem Reittierhuf gewährleistet, ohne die Bewegungsfähigkeit des Hufes in irgendeiner Weise zu beeinträchtigen, so daß mit einer derartigen Ausbildung ein sicher und zuverlässig der elastischen Bewegung des Reittierhufes folgender Hufschutz zur Verfügung gestellt werden kann.

Indem die Gelenkverbindung des Hufschutzes derart ausgebildet ist, daß die Teile des Hufschutzes über die Gelenkverbindung in der Ebene der Auflageseite des Hufschutzes relativ zueinander beweglich sind, kann sichergestellt werden, daß der Hufschutz lediglich einem Breittreten des Hufes beim Auffußen folgen kann und nicht ein unbeabsichtigtes Verschwenken der Teile des Hufschutzes in aus der Ebene der Auflageseite des Hufschutzes herausragender Richtung auftritt, wodurch übermäßige Stöße auf das Hufmaterial und einseitige Belastungen des Hufes des Reittieres mit Sicherheit vermieden werden können.

Um insbesondere die empfindlichen Bereiche des Reittierhufes vor der Möglichkeit des Auftretens von Druckstellen und langfristig vor Entzündungen im Bereich der gelenkigen Verbindungen mit Sicherheit zu schützen, ist die Erfindung dahingehend weitergebildet, daß die Gelenkverbindung an der Hufauflageseite mit einem Abdeckelement, insbesondere einem Leder- oder Kunststoffabdeckelement, versehen ist. Durch Einlegen eines Abdeckelementes, insbesondere einer Leder- oder Kunststoffabdeckung, kann einerseits die Dämpfungseigenschaft bzw. Stoßdämpfungseigenschaft des Hufschutzes in bezug auf den Reittierhuf in an sich bekannter Weise weiter verbessert werden und andererseits wird sichergestellt, daß auch möglicherweise ausgeschlagene bzw. lockere Gelenkverbindungen nicht auf den Reittierhuf drücken können und somit Verletzungen des Reittierhufes hervorrufen können.

Um eine weitere Erhöhung der Standzeit des Hufschutzes zu erzielen, kann die Erfindung dahingehend weitergebildet werden, daß die Gelenkverbindung bei Anordnung im Zehenbereich des Hufschutzes an der Laufseite mit einer zusätzlichen Materialverdickung versehen ist. Durch eine derartige Materialverdickung kann neben einer Erhöhung der Standzeit auch ein zusätzlicher Schutz der Gelenkverbindung erzielt werden.

Die Erfindung wird nachfolgend anhand von in der Zeichnung dargestellten Ausführungsbeispielen näher erläutert. In dieser zeigen:
Fig. 1 ein Hufeisen bestehend aus 2 Teilbereichen im getrennten Zustand mit einer Gelenkverbindung, die als Kugelgelenk ausgebildet ist, in der Draufsicht von unten,
Fig. 2 eine Teilansicht eines Hufeisens im getrennten Zustand, in welcher eine Gelenkverbindung als beidseitig lösbarer Einsatz vorgesehen ist, in der Ansicht von unten,
Fig. 3 ein Hufeisen im zusammengebauten Zustand, in der Ansicht von oben mit einem beidseitig lösbaren Einsatz einer eine Gelenkverbindung übergreifenden Metallhülse sowie Aufzügen rechts und links neben der Gelenkverbindung, und
Fig. 4 eine andere Variante eines Hufeisens gemäß der Erfindung in zusammengebautem Zustand in Ansicht von unten, welches zwei Gelenkverbindungen aufweist.

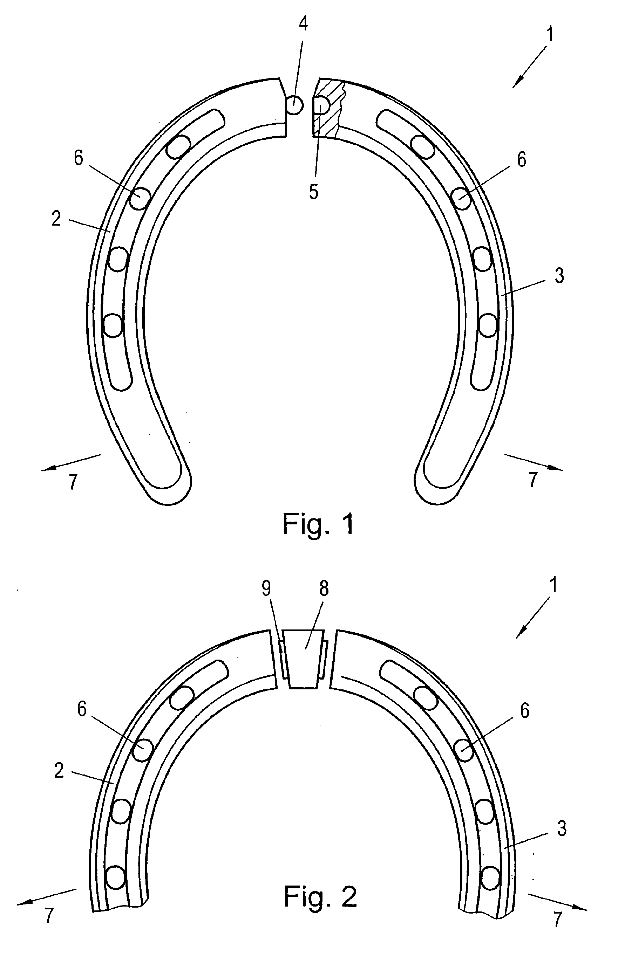

Im Einzelnen ist in Fig. 1 mit 1 ein Hufeisen bezeichnet, welches aus zwei voneinander lösbaren Teilen 2, 3 ausgebildet ist. Die Kugel 4 der Gelenkverbindung ist hierbei an dem einen Teil 2 des Hufeisens 1 ausgebildet, wohingegen die Pfanne 5 an dem anderen Teil 3 des Hufeisens 1 ausgebildet ist. Durch ledigliches Zusammenstecken der Gelenkverbindung, d.h. Einfügen der Kugel 4, gegebenenfalls unter Druck, in die Pfanne 5 gelingt es, das Hufeisen 1 zusammenzusetzen, welches nach einem Aufnageln durch wenigstens einige der in dem Hufeisen 1 schematisch dargestellten Nagellöcher 6 des Hufeisens 1 auf einen nicht dargestellten Pferdehuf sicherstellt, daß die Teile 2, 3 einerseits nicht voneinander getrennt werden können, jedoch andererseits beim Auffußen des Pferdes bzw. Reittieres, insbesondere bei Druckbelastung auf das Hufeisen 1 sich in Richtung der Pfeile 7 aufweiten können. Hiefür sind im Bereich der Gelenkverbindung die zur Außenseite des Hufeisens 1 gerichteten Bereiche der Hufeisen-Teile 2, 3 als Abschrägungen 12 ausgebildet, so daß das Hufeisen 1 der Bewegung in Richtung des Pfeils 7 ungehindert folgen kann.

Bei der Darstellung gemäß Fig. 2 ist eine Teilansicht eines Hufeisens 1, nämlich jene, in welcher die Gelenkverbindung eingesetzt ist, dargestellt. Die Gelenkverbindung gemäß Fig. 2 ist hierbei als beidseitig lösbares Einsatzelement 8, insbesondere Kunststoffeinsatzteil ausgebildet. Das Einsatzteil bzw. Einsatzelement 8 wird hierbei in den jeweiligen eilen 2, 3 des Hufeisens 1 vorgesehene, in der Zeichnung nicht erkennbare Ausnehmungen über Fortsätze 9, welche an dem Einsatzelement 8 vorgesehen sind, eingesetzt und in der Folge der gesamte so aufgebaute Hufschutz auf den Pferdehuf über wenigstens einige, schematisch dargestellte Nagellöcher 6 genagelt. Aufgrund der Ausbildung des Einsatzelementes 8 aus Kunststoff gelingt es, bei dem Hufeisen 1 gemäß Fig. 2 die Abschrägungen, welche bei Verwendung von metallischen Gelenkverbindungen zur Außenseite des Hufeisens 1 erforderlich sind, wegzulassen, da aufgrund der Elastizität des Einsatzelementes 8 dieses bei Bewegung der Teile 2, 3 des Hufeisens 1 in Richtung des Pfeils 7 entsprechend gestaucht werden kann, wodurch Ausnehmungen bzw. Bearbeitungen an dem Hufeisen 1 unterbleiben können. Nach Festlegung des Hufeisens 1 auf einem Reittierhuf ist aufgrund der Fortsätze 9 in dem Einsatzelement, das Einsatzelement 8 in dem Hufeisen 1 unverlierbar gehalten, so daß eine vorzeitige Zerstörung des Hufeisens 1 aufgrund des Herausfallens des Einsatzelementes 8 mit Sicherheit vermieden werden kann. Weiterhin kann mit einer derartigen Ausbildung eine verbesserte Stoßdämpfungseigenschaft erzielt werden.

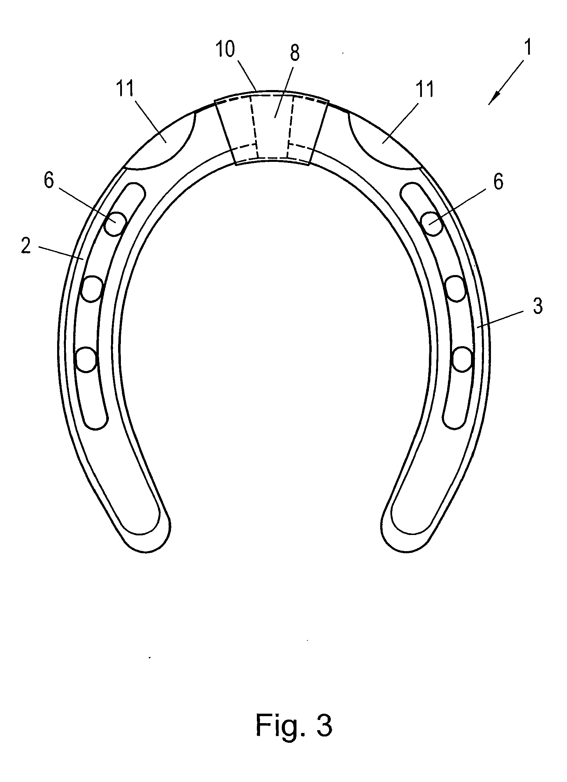

Um gegebenenfalls ein Hufeisen mit einem Einsatzelement 8, wie es in Fig. 2 dargestellt ist, auch vor dem Aufnageln auf den Pferdehuf als Ganzes bearbeiten zu können, wird, wie dies in Fig. 3 dargestellt ist, auf das Hufeisen 1 im Bereich des Einsatzelementes 8 eine schematisch dargestellte Hülse 10 aufgesetzt, welche Hülse 10 beispielsweise an der Außenseite des Hufeisens 1 durch einfaches Aufbiegen über das Hufeisen 1 geklemmt bzw. gebogen werden kann.

Bei der Darstellung gemäß Fig. 3 weist das Hufeisen 1 wiederum zwei Teile 2, 3 auf, zwischen welchen ein Kunststoff-Einsatzelement 8 im eingesetzten Zustand dargestellt ist. Neben dem Kunststoff-Einsatzelement 8, insbesondere an den zur Außenseite des Hufeisens 1 gerichteten Bereichen ist hierbei zusätzlich schematisch jeweils ein Aufzug 11 dargestellt, mit welchem die Anlage des Hufeisens 1 an dem Pferdehuf insbesondere beim Festlegen des Hufeisens 1 noch besser gewährleistet werden kann. Die Aufzüge 11 haben darüber hinaus den Vorteil, daß sie insbesondere bei spröden, stark belasteten und beanspruchten Pferdehufen den Huf zusätzlich schützen können, so daß neben der Vereinfachung des Festlegens des Hufeisens 1 auf dem Pferdehuf das Eisen insbesondere einen kompletteren Schutz des Pferdes bzw. Reittierhufes zur Verfügung stellt.

Wenn der Hufschutz 1 gemäß Fig. 3 entsprechend an den damit zu versehenden Reittierhuf angepaßt wurde, insbesondere durch entsprechendes Biegen der Hufeisenteile 2, 3, kann einerseits in weiterer Folge vor dem Festlegen des Hufeisens 1 auf dem Reittierhuf die Schutz-Hülse 10 entfernt werden, um keine Unebenheiten auf der Innenseite des Hufeisens 1 und somit einen Druck auf den Reittierhuf zu provozieren. Andererseits kann bei Belassen der Hülse 10 an Ort und Stelle, um einen derartigen Druck auf den Reittierhuf mit Sicherheit zu vermeiden, zusätzlich über die gesamte Fläche des Hufschutzes 1, insbesondere an der zum Pferdehuf gewandten Seite, ein Einlageelement aus Kunststoff, Leder oder dgl. eingesetzt werden, um Unebenheiten zwischen der Hülse 10 oder Gelenkverbindung des Hufschutzes und dem Hufeisen 1 mit Sicherheit zu vermeiden.

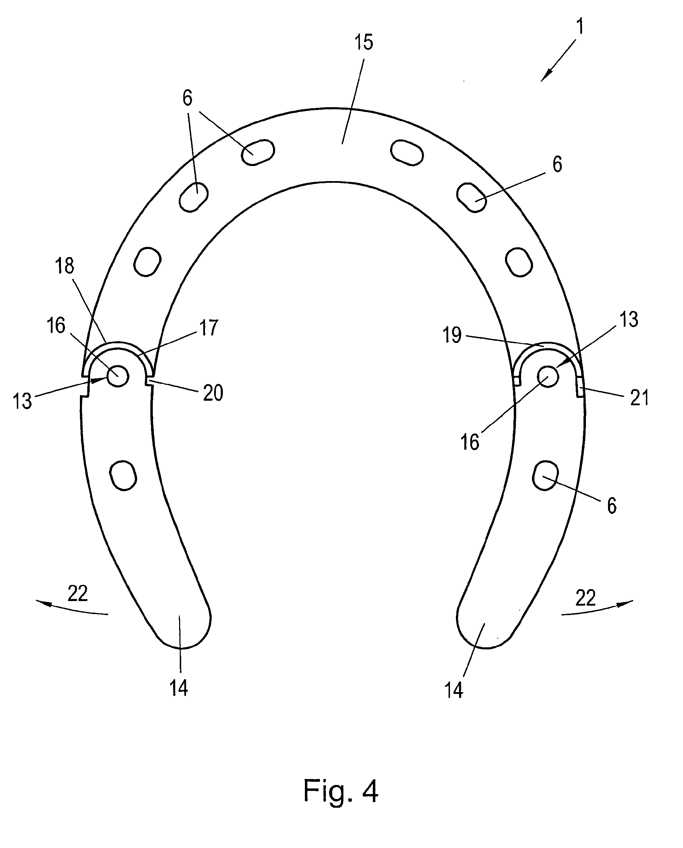

Die Ausführungsvariante der Erfindung gemäß Fig. 4 zeigt ein Hufeisen 1, welches zwei Gelenkverbindungen 13 aufweist, mit welchen die rückwärtigen Endteile 14 des Hufeisens 1 gelenkig mit einem zur Hufvorderseite gerichteten Zentralteil 15 verbunden sind. Das Zentralteil 15 weist hiebei Nagellöcher 6 sowie gegebenenfalls Aufzüge, welche in der vorliegenden Darstellung nicht erkenntlich sind, auf. Die Gelenkverbindung 13 gemäß Fig. 4 ist so geführt, daß die beweglich an dem Zentralteil 15 angelenkten Teile 14 über einen Stift 16 auf dem Zentralteil 15 aufgesteckt sind, wobei der Stift 16 derart ausgebildet ist, daß er an dem Zentralteil 15 angeschweißt bzw. mit diesem einstückig ausgebildet ist, um die empfindliche Hufsohle bzw. den empfindlichen Hufrand eines Pferds nicht durch gegebenenfalls vorstehende Teile des Stifts 16 verletzen zu können.

Nach Aufstecken des Teils 14 auf die Stifte 16 wird der obere freie Bereich des Stifts 16 beispielsweise breitgekopft bzw. umgebogen oder plan abgeschliffen, um einen sicheren Halt des Teils 14 auf den Stift zu gewährleisten.

Das Teil 14 weist an seinem zum Zentralteil gerichteten Ende eine abgerundete Außenkontur 17 auf, welche im wesentlichen einer komplementären Ausnehmung 18 in dem Zentralteil 15 des Hufeisens 1 entspricht. Zwischen dem abgerundeten Endbereich 17 und der Ausnehmung 18 ist ein Spalt 19 für eine entsprechende Bewegung des Teils 14 um den Stift 16 freigelassen. In diesen Spalt 19 kann beispielsweise ein nachgiebiges Kunststoffelement eingelegt sein, um einerseits die Funktion und die Bewegungsfähigkeit der Teils 14 gegenüber dem Teil 15 zu gewährleisten und andererseits ein Verschmutzen dieses Spalts 19 mit Sicherheit hintanzuhalten, um eine Beschädigung und auch eine Funktionsunfähigmachen des Gelenks 13 mit Sicherheit zu vermeiden.

Schließlich sind die Teile 14 bzw. 15 jeweils so ausgenommen, daß an der zur Hufinnenseite gerichteten Seite des Hufeisens 1 als auch an der zu Hufaußenseite gerichteten Seite des Hufeisens 1 jeweils ein Spalt ausgebildet ist, um die Bewegungsfähigkeit des Teils 14 in bezug auf das Zentralteil 15 gewährleistet wird. Der Spalt 20 an der zum Inneren des Hufs gerichteten Seite des Hufeisens 1 ist hiebei mit einer kleiner Abmessung ausgebildet als der Spalt 21, welcher zur Hufaußenseite gerichtet ist, da bei der normalen Bewegung eines Reittiers insbesondere beim Auffußen des Reittiers der Huf in Richtung des Pfeils 22 aufgeweitet wird, so daß das Hufeisen 1 in Richtung des Pfeils 22 eine größere Bewegungsfreiheit als in entgegengesetzter Richtung erfordert. Um ein Verschmutzen des Spalts 20 bzw. 21 mit Sicherheit hintanzuhalten, ist auch in diesem Spalt 20, 21 wiederum ein Gummielement bzw. Kunststoffelement eingesetzt, welches entsprechend nachgiebig ausgebildet ist. In der Zeichnung ist hiebei das Gummielement nur in einem Spalt 20, 21 eingesetzt dargestellt, wobei es selbstverständlich in der Praxis entweder beidseitig eingesetzt oder beidseitig weggelassen ist.

Schließlich kann die Ausbildung gemäß Fig. 4 so getroffen sein, daß in den Teilen 14 statt eines Nagellochs 6 wenigstens eine sich in Richtung zum Huf erstreckende Erhebung, insbesondere Spitzen, ausgebildet ist, um einen sicheren Halt des Hufeisens 1 zu gewährleisten.

Weiterhin ist insbesondere zum Schutz der gelenkigen Verbindung 13 zwischen den Teilen 14 und 15 des Hufeisens an der Laufseite des Hufeisens eine Abdeckung, insbesondere Metallabdeckung vorgesehen.

Es ist für einen Fachmann offensichtlich, daß ein derartiger Hufschutz auch für den Heißbeschlag einsetzbar ist, wobei im Falle des Einsatzes einer Gelenkverbindung aus Metall keinerlei gesonderten Vorsichtsmaßnahmen zu beachten sind. Wenn es gewünscht ist, einen Kunststoffeinsatz in das Hufschutz einzusetzen, wird bevorzugt so vorgegangen, daß während der Bearbeitung des Hufschutzes bzw. Hufeisens 1, insbesondere Heißbearbeitung desselben, anstelle des Kunststoff-Einsatzes 8 ein Platzhalteelement aus Metall gemeinsam mit der Schutzhülse 10 vorgesehen wird und nach entsprechender Bearbeitung des Hufeisens 1 sowohl die Hülse 10 als auch das Platzhalteelement entfernt werden und statt dessen der gewünschte Kunststoffeinsatz eingesetzt wird.

Selbstverständlich kann das Hufeisen 1 auch derart ausgebildet werden, daß einerseits ein vollständig aus Kunststoff ausgebildeter Hufschutz zum Einsatz gelangt und/oder andererseits eine Mehrzahl von Gelenkverbindungen, insbesondere zwei Gelenkverbindungen in dem Hufschutz vorgesehen sind, in welchem Fall zur Vereinfachung der Bearbeitung die Gelenkverbindungen in derartigen Bereichen vorgesehen sind, daß jeweils neben den Gelenkverbindungen sowohl Aufzüge als auch Nagellöcher vorgesehen sind, um ein sicheres und zuverlässiges Festlegen des Hufschutzes auf dem Reittierhuf zu gewährleisten. Weiters kann statt eines genagelten Hufschutzes selbstverständlich auch jeder geklebte Hufschutz mit der erfindungsgemäßen Gelenkverbindung zum Einsatz gelangen.

Eine weitere insbesondere in der Praxis gut einsetzbare Variante des Hufschutzes, insbesondere eine zwei Gelenkverbindungen im Schenkelbereich des Hufschutzes aufweisende Variante, ist eine Kombination mit einem herkömmlichen Hufeisen, wobei in diesem Fall das Hufeisen als eine Metallabdeckung für die Gelenkverbindung des Hufschutzes gemäß der Erfindung dient. Hiebei wird auf der Laufseite des Hufschutzes zusätzlich ein herkömmliches Hufeisen angelegt und beide Elemente, der Hufschutz gemäß der Erfindung und das herkömmliche Hufeisen, werden an dem Reittierhuf, im Zehenbereich über deckungsgleich ausgebildete Nagellöcher festgenagelt. Bei einer derartigen Ausbildung kann der Hufschutz gemäß der Erfindung dünner ausgebildet werden, da der Verschleiß der Laufseite aufgrund des zum Schutz des Hufschutzes zusätzlich aufgenagelten Hufeisens extrem herabgesetzt ist, wobei gleichzeitig, insbesondere aufgrund der lediglich im Zehenbereich des Reittieres angebrachten Nägel, die Funktionsfähigkeit und Wirkung des Hufschutzes nicht herabgesetzt ist.

## Patentansprüche

1. Hufschutz, insbesondere Hufeisen, für Reittierhufe mit einem hufeisenförmigen, eine Laufseite und eine Hufauflageseite aufweisenden Grundkörper sowie gegebenenfalls wenigstens einen am Grundkörper festgelegten Aufzug, **dadurch gekennzeichnet, daß** der Grundkörper wenigstens zweigeteilt (2, 3, 14, 15) ausgebildet ist, und daß jeweils zwei Teile (2, 3, 14, 15) des Grundkörpers gelenkig (4, 5, 8, 13) miteinander verbunden sind.

2. Hufschutz nach Anspruch 1, **dadurch gekennzeichnet, daß** jeweils zwei Teile (2, 3, 14, 15) des Grundkörpers (1) mittels einer lösbaren Gelenkverbindung (4, 5, 8, 13) verbunden sind.

3. Hufschutz nach Anspruch 1 oder 2, **dadurch gekennzeichnet, daß** die Gelenkverbindung (4, 5, 8, 13) aus einem an den daran anschließenden Teilen des Grundkörpers (1) lösbar festgelegten Einsatz (8), einem Kugelgelenk (4, 5) und einer Verbindung mit eingesetztem Stift bzw. Niet (16) oder dgl. gebildet ist.

4. Hufschutz nach Anspruch 3, **dadurch gekennzeichnet, daß** der beidseitig lösbare Einsatz (8) aus Kunststoff gebildet ist.

5. Hufschutz nach Anspruch 3 oder 4, **dadurch gekennzeichnet, daß** in dem Hufschutz (1) als beidseitig lösbarer Einsatz (8) Einsatzelemente unterschiedlicher Größe, Dicke, Materialzusammensetzung und dgl. zum Einsatz gelangen.

6. Hufschutz nach einem der Ansprüche 1 bis 5, **dadurch gekennzeichnet, daß** im Bereich der Gelenkverbindung (4, 5, 8, 13) eine den Gelenkverbundbereich übergreifende Metallhülse (10) vorgesehen ist.

7. Hufschutz nach einem der Ansprüche 1 bis 6, **dadurch gekennzeichnet, daß** wenigstens auf der Laufseite des Hufschutzes (1) eine die Gelenkverbindung (4, 5, 8, 13) übergreifende Metallabdeckung vorgesehen ist.

8. Hufschutz nach Anspruch 7, **dadurch gekennzeichnet, daß** die Metallabdeckung sich im wesentlichen über die gesamte Laufseite des Hufschutzes (1) erstreckt.

9. Hufschutz nach einem der Ansprüche 1 bis 8, **dadurch gekennzeichnet, daß** jeweils einer Gelenkverbindung (4, 5, 8) zwei am Grundkörper (1) festgelegte Aufzüge (11) benachbart sind.

10. Hufschutz nach einem der Ansprüche 1 bis 9, **dadurch gekennzeichnet, daß** die Teile des Hufschutzes (1) über die Gelenkverbindung (4, 5, 8, 13) in der Ebene der Auflageseite des Hufschutzes relativ zueinander beweglich sind.

11. Hufschutz nach einem der Ansprüche 1 bis 10, **dadurch gekennzeichnet, daß** die Gelenkverbindung (4, 5, 8, 13) an der Hufauflageseite mit einem Abdeckelement, insbesondere Leder- oder Kunststoffabdeckelement, versehen ist.

12. Hufschutz nach einem der Ansprüche 1 bis 11, **dadurch gekennzeichnet, daß** die Gelenkverbindung (4, 5, 8) bei Anordnung im Zehenbereich des Hufschutzes (1) an der Laufseite mit einer zusätzlichen Materialverdickung versehen ist.
